(19) Europäisches Patentamt
European Patent Office
Office européen des brevets

(11) **EP 3 789 364 A1**

(12) # EUROPÄISCHE PATENTANMELDUNG

(43) Veröffentlichungstag:
**10.03.2021  Patentblatt 2021/10**

(21) Anmeldenummer: **20194172.1**

(22) Anmeldetag: **02.09.2020**

(51) Int Cl.:
*C04B 35/573* (2006.01)    *C03C 14/00* (2006.01)
*C04B 35/628* (2006.01)    *C04B 35/653* (2006.01)
*C04B 35/80* (2006.01)    *C22C 29/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **03.09.2019   DE 102019213351**

(71) Anmelder: **FRAUNHOFER-GESELLSCHAFT zur Förderung
der angewandten Forschung e.V.
80686 München (DE)**

(72) Erfinder:
• **Raether, Friedrich**
  **97082 Würzburg (DE)**
• **Konschak, Alexander**
  **97082 Würzburg (DE)**
• **Schmidt, Jens**
  **97082 Würzburg (DE)**

(74) Vertreter: **Pfenning, Meinig & Partner mbB
Patent- und Rechtsanwälte
Theresienhöhe 11a
80339 München (DE)**

(54) **VERFAHREN ZUR HERSTELLUNG FASERVERSTÄRKTER VERBUNDWERKSTOFFE MIT STABILISIERTEN FASERN, FASERBESCHICHTUNGEN UND/ODER FASERBÜNDELBESCHICHTUNGEN**

(57)     Die vorliegende Erfindung betrifft ein Verfahren zur Herstellung faserverstärkter Verbundwerkstoffe mit stabilisierten Fasern, Faserbeschichtungen und/oder Faserbündelbeschichtungen. Im Verfahren wird eine Faserpreform bereitgestellt, welche Verstärkungsfasern umfasst, wobei die Verstärkungsfasern jeweils mit mindestens einer Beschichtung beschichtet sind und/oder die Verstärkungsfasern in Bündeln angeordnet sind, welche jeweils mit mindestens einer Beschichtung beschichtet sind. In die Faserpreform werden konvexe Partikel eingebracht, die mindestens ein Material enthalten oder aus diesem bestehen, welches identisch ist mit einem Material der Verstärkungsfasern und/oder mit einem Material der mindestens einen Beschichtung der Verstärkungsfasern und/oder mit einem Material der mindestens einen Beschichtung der Bündel. Während und/oder nach dem Einbringen der konvexen Partikel in die Faserpreform wird die Faserpreform mit einer Schmelze infiltriert. Erfindungsgemäß ist der Krümmungsradius der konvexen Partikel kleiner als der Krümmungsradius der Verstärkungsfasern. Auf diese Weise kann eine Stabilisierung der Verstärkungsfasern, Verstärkungsfaserbeschichtungen und/oder Verstärkungsfaserbündelbeschichtungen erreicht werden. Die vorliegende Erfindung betrifft zudem einen faserverstärkten Verbundwerkstoff mit stabilisierten Fasern, Faserbeschichtungen und/oder Faserbündelschichtungen. Die Faservorforme werden mit Partikel infiltriert, die kleiner sind als die Dicke der Verstärkungsfaser.

EP 3 789 364 A1

EP 3 789 364 A1

**Beschreibung**

Die vorliegende Erfindung betrifft ein Verfahren zur Herstellung faserverstärkter Verbundwerkstoffe mit stabilisierten Fasern, Faserbeschichtungen und/oder Faserbündelbeschichtungen. Im Verfahren wird eine Faserpreform bereitgestellt, welche Verstärkungsfasern umfasst, wobei die Verstärkungsfasern jeweils mit mindestens einer Beschichtung beschichtet sind und/oder die Verstärkungsfasern in Bündeln angeordnet sind, welche jeweils mit mindestens einer Beschichtung beschichtet sind. In die Faserpreform werden konvexe Partikel eingebracht, die mindestens ein Material enthalten oder aus diesem bestehen, welches identisch ist mit einem Material der Verstärkungsfasern und/oder mit einem Material der mindestens einen Beschichtung der Verstärkungsfasern und/oder mit einem Material der mindestens einen Beschichtung der Bündel. Während und/oder nach dem Einbringen der konvexen Partikel in die Faserpreform wird die Faserpreform mit einer Schmelze infiltriert. Erfindungsgemäß ist der Krümmungsradius der konvexen Partikel kleiner als der Krümmungsradius der Verstärkungsfasern. Auf diese Weise kann eine Stabilisierung der Verstärkungsfasern, Verstärkungsfaserbeschichtungen und/oder Verstärkungsfaserbündelbeschichtungen erreicht werden. Die vorliegende Erfindung betrifft zudem einen faserverstärkten Verbundwerkstoff mit stabilisierten Fasern, Faserbeschichtungen und/oder Faserbündelschichtungen.

Keramische Faserverbundwerkstoffe bzw. Ceramic Matrix Composites (CMC) besitzen eine um ca. eine Größenordnung höhere Schadenstoleranz und Bruchdehnung als monolithische Keramiken. Dies wird durch Verstärkungsfasern erreicht, die in den CMC-Werkstoffen enthalten sind. Beim Bruch muss möglichst viel Bruchenergie in der Matrix bzw. in der Grenzfläche zwischen Fasern und Matrix dissipiert werden, um das schadenstolerante Verhalten zu gewährleisten. Die Schadenstoleranz wird üblicherweise über die Bruchzähigkeit gemessen. Es gibt zwei wesentliche Konzepte, mit denen die für die Schadenstoleranz benötigte Energiedissipation erreicht wird: das "weak matrix"-Konzept und das "weak interface"-Konzept.

Das "weak matrix"-Konzept setzt eine Matrix voraus, die im Vergleich zu den Fasern eine so geringe Steifigkeit und Festigkeit besitzt, dass sie bei hohen Belastungen vielfach bricht und damit Bruchenergie absorbiert. Die entsprechenden Eigenschaften werden ausschließlich mit porösen Matrizes realisiert. Nachteil dieser porösen Matrizes ist deren Gasdurchlässigkeit. Diese führt dazu, dass korrosive Gase, wie sie beim Einsatz der CMC bei hohen Temperaturen über 1000 °C häufig vorkommen, in die Porenkanäle eindringen können und sowohl die Matrix als auch die Verstärkungsfasern schädigen.

Beim "weak interface"-Konzept wird gezielt eine schwache Anbindung zwischen den Verstärkungsfasern und der Matrix hergestellt. Bei hohen Belastungen versagt zunächst die Matrix. Durch die schwache Anbindung der Verstärkungsfasern kommt es an der Fasergrenzfläche zu Rissablenkungen und bei einer Aufweitung des Risses zum sogenannten "Pullout" der Fasern aus der Matrix. Rissablenkung und Faser-"Pullout" sorgen für die Erhöhung der Bruchenergie. Die schwache Anbindung der Verstärkungsfasern an die Matrix wird durch spezielle Beschichtungen auf den Fasern erreicht. In den im Folgenden auch als Gleitschichten bezeichneten Beschichtungen kommt es zu Rissablenkung, Rissverzweigung und zu einer plastischen Scherverformung zwischen Faser und Matrix. Zusätzlich zu diesen Gleitschichten werden die Verstärkungsfasern häufig noch mit Schutzschichten beschichtet, die Faser und Gleitschicht davor bewahren, chemische Reaktionen mit der Matrix einzugehen.

Beim "weak interface"-Konzept können dichte Matrizes eingesetzt werden. Dazu wird eine Schmelze in eine Preform, die die Verstärkungsfasern enthält, infiltriert. Die Schmelze kann während des Infiltrationsprozesses mit bereits vorhandenen Komponenten der Matrix reagieren und neue Phasen ausbilden. Es sollten jedoch keine Reaktionen zwischen der Gleitschicht und der Schmelze oder der Faser und der Schmelze auftreten. Da die Schmelzinfiltration bei hohen Temperaturen durchgeführt werden muss und atomare Spezies bei diesen Temperaturen sehr stark diffundieren, ist ein effektiver Schutz der Gleitschicht und der Fasern schwierig.

Bisher trat das Problem beim sogenannten LSI-Prozess ("Liquid-Silicon-Infiltration") in Verbindung mit Preformen aus Carbonfasern oder Siliciumcarbid (SiC)-Fasern auf. Beim LSI-Prozess wird eine Silicium-Schmelze durch Kapillarkräfte in die Porenkanäle der Preform gesaugt. Das Silicium reagiert im Direktkontakt mit Kohlenstoff, der sich in der Preform befindet unter Bildung von Siliciumcarbid. Es greift dabei neben der Matrix auch den jeweils eingesetzten Fasertyp an. Sowohl Carbonfasern als auch SiC-Fasern werden dabei geschädigt.

Die Verstärkungsfasern wurden aus diesem Grund mit Gleitschichten aus Bornitrid (BN), pyrolytisch abgeschiedenem Kohlenstoff (PyC), Schichtsilikaten, Hexaluminaten oder Schichtperowskiten beschichtet. Außerdem wurden Schutzschichten aus Siliciumcarbid, Siliciumnitrid oder Carbon-Materialien eingesetzt. Letztere reagieren beim LSI-Prozess mit der Silicium-Schmelze und bilden im Idealfall dichte SiC-Schichten aus. Allerdings ist ein wirksamer Schutz einzelner Verstärkungsfasern sehr schwierig und erfordert sehr dicke und dichte Schutzbeschichtungen. Deshalb werden häufig auch ganze Faserbündel außen mit einer Schutzbeschichtung versehen, die verhindert, dass die Silicium-Schmelze in das Innere der Faserbündel eindringt.

Da die Reaktivität der Silicium-Schmelze mit der Temperatur ansteigt, wurde bisher schon das infiltrierte Silicium mit anderen Elementen dotiert. Durch die Dotierung kann die Schmelztemperatur abgesenkt werden. Zum Beispiel wird der Schmelzpunkt des Siliciums durch Dotierung mit 8 At.-% Bor von 1410 °C auf 1385 °C abgesenkt. Zusätzlich kann das Bor in der Silicium-Schmelze die Lösung von weiterem Bor aus der Gleitschicht verlangsamen. Aus der Literatur ist bekannt, dass Faserpreformen vor der Silicium-Infiltration meist mit Schlickern aus Siliciumcarbid-Partikeln oder Kohlenstoffpartikeln getränkt werden.

In der US 97/21874 wird der Matrixaufbau von CMC mit SiC-Fasern mit einem Schlicker beschrieben, der SiC-Partikel mit bimodaler Kornverteilung und einer Korngröße von 0,1 bis 0,8 μm enthält. Zudem kann der Schlicker 0,5 bis 5 Gew.-% Borcarbid enthalten. In der Silicium-Schmelze, zur abschließenden Infiltration einer porösen Preform, werden Kohlenstoff (0,003 bis 10 Gew.-%) und Bor (1 bis 10 Gew.-%) als Legierungszusätze vorgeschlagen.

In der US 2013/0167374 A1 wird die Verwendung eines Schlickers vorgeschlagen, der Silicium und Kohlenstoff in Form von Ruß im stöchiometrischen Verhältnis 1 : 1 enthält. Weiterhin werden als refraktäre Schlickeradditive Molybdän, Tantal und Niob sowie die korrespondierenden Carbide, Silicide, Nitride dieser Metalle genannt. Diese Elemente und Verbindungen können auch optional zur Legierungsinfiltration verwendet werden, um den Schmelzpunkt bei der Infiltration abzusenken und um den freien Silicium-Anteil in der Matrix durch Verbindungsbildung zu verringern. Zum Matrixaufbau werden zudem Polymere als Precursoren eingesetzt, die nach der Pyrolyse Keramiken bilden, die der chemischen Zusammensetzung von Siliciumcarbid und unterschiedlichen Siliciumnitrid-Verbindungen entsprechen.

In der EP 3231782 A1 wird zur Verbesserung der Bruchdehnung von SiC/SiC ein Verfahren beschrieben, bei welchem eine Matrix verwendet wird, die aus mehreren Phasen neben SiC als Hauptphase (20 bis 90 Vol.-%) besteht. Es werden Partikel oder Agglomerate als zweite Phase vorgeschlagen, die eine geringe Aktivität gegenüber SiC (Fasern und Matrix) aufweisen. Hierzu zählen Partikel aus Kohlenstoff, Silicium, Siliciumcarbid, Nitride, Oxide, Carbide, Boride und Silicate. Beispielhaft wird ein Schlicker aus SiC und weiteren Partikeln hergestellt, welcher direkt auf die Fasern oder Faserpreform aufgetragen wird, um ein Laminat zu erzeugen. Die Matrixbildung erfolgt durch nachfolgendes Flüssigphasensintern, Reaktionssintern oder CVI-Verfahren. Bei dem Verfahren wird sowohl auf eine Faserbeschichtung als auch auf eine Silicium-Infiltration verzichtet.

Nachteil der bisherigen Lösungen ist, dass die benötigten dicken Schutzbeschichtungen teuer sind und eine textile Verarbeitung der beschichteten Faserbündel erschweren. Ersteres wirkt sich besonders bei der Anwendung von Gasphasenbeschichtungsverfahren aus, da diese generell langsam sind und die Schichtdicken entscheidend von der Prozesszeit abhängen. Letzteres gilt für alle fortgeschrittenen Verfahren der Textiltechnik, die bei flexiblen Faserbündeln eingesetzt werden können: Weben, Flechten, Wickeln etc. Die bisher erforderlichen dicken Schutzbeschichtungen beschränken die Weiterverarbeitung der Faserbündel auf Ablegetechniken und relativ einfache Geometrien. Prepregverfahren, die für eine industrielle Herstellung von CMC wünschenswert sind, können so nicht eingesetzt werden. Alternativ erfolgt die Faserbeschichtung bisher an den fertigen Preformen. Der Nachteil besteht jedoch in den hohen Kosten der dann alternativlos einzusetzenden Gasphasenbeschichtungsverfahren. Außerdem ist eine gleichmäßige Beschichtung der Faser bzw. Faserbündel in der Preform sehr schwierig, weil es zahlreiche Kontaktstellen und Abschattungen gibt, an denen die Abscheidung nicht effizient abläuft. Während zu Beginn des Gasphasenbeschichtungsverfahren noch sämtliche Faseroberflächen vom Prozessgas erreicht werden und eine gleichmäßige Beschichtung erfolgen kann, werden im weiteren Verlauf der Abscheidung durch die Ausbildung von Verbrückungen und einem damit verbundenem Verschluss offener Kanäle große Bereiche an Faseroberflächen von einer weiteren Beschichtung ausgeschlossen.

Ausgehend hiervon war es somit die Aufgabe der vorliegenden Erfindung ein Verfahren zur Herstellung faserverstärkter Verbundwerkstoffe anzugeben, bei welchem Fasern, Faserbeschichtungen und/oder Faserbündelbeschichtungen der zur Herstellung verwendeten Faserpreformen effektiv geschützt bzw. stabilisiert werden können, ohne dass die textile Verarbeitbarkeit der Fasern dadurch erschwert wird.

Diese Aufgabe wird bezüglich eines Verfahrens zur Herstellung faserverstärkter Verbundwerkstoffe mit stabilisierten Fasern, Faserbeschichtungen und/oder Faserbündelbeschichtungen mit den Merkmalen des Patentanspruchs 1 und bezüglich eines faserverstärkten Verbundwerkstoffs mit den Merkmalen des Patentanspruchs 12 gelöst. In Patentanspruch 15 werden Verwendungsmöglichkeiten des erfindungsgemäßen faserverstärkten Verbundwerkstoffs angegeben. Die abhängigen Patentansprüche stellen vorteilhafte Weiterbildungen dar.

Erfindungsgemäß wird somit ein Verfahren zur Herstellung faserverstärkter Verbundwerkstoffe mit stabilisierten (Verstärkungs-)Fasern, (Verstärkungs-)Faserbeschichtungen und/oder (Verstärkungs-)Faserbündelschich-tungen angegeben, bei welchem

a) eine Faserpreform zur Herstellung faserverstärkter Verbundwerkstoffe bereitgestellt wird, welche Verstärkungsfasern umfasst, wobei die Verstärkungsfasern jeweils mit mindestens einer Beschichtung beschichtet sind und/oder die Verstärkungsfasern in Bündeln angeordnet sind, welche jeweils mit mindestens einer Beschichtung beschichtet sind,

b) konvexe Partikel in die Faserpreform eingebracht werden, die mindestens ein Material enthalten oder aus diesem bestehen, welches identisch ist mit einem Material der Verstärkungsfasern und/oder mit einem Material der mindestens einen Beschichtung der Verstärkungsfasern und/oder mit einem Material der mindestens einen Beschichtung der Bündel, und

c) die Faserpreform mit einer Schmelze infiltriert wird,

wobei Schritt c) während Schritt b) und/oder nach Schritt b) erfolgt, und wobei der Krümmungsradius der konvexen Partikel kleiner ist als der Krümmungsradius der Verstärkungsfasern.

Der Krümmungsradius (Äquivalentradius) der konvexen Partikel kann bestimmt werden gemäß der Norm DIN EN ISO 13383-1. Die Ermittlung des Krümmungsradius der Verstärkungsfasern kann mithilfe der weiter unten angegebenen Gleichung (1) bestimmt werden. Hierbei wird der mittlere Krümmungsradius R gemäß Gleichung (1) aus den Hauptkrümmungsradien berechnet. Der hierfür benötigte Faserdurchmesser kann lichtmikroskopisch an einzelnen Faserquerschnitten oder in Probenanschliffen ermittelt werden.

In Schritt a) des erfindungsgemäßen Verfahrens wird somit zunächst eine (zur Herstellung faserverstärkter Verbundwerkstoffe geeignete) Faserpreform bereitgestellt. Diese Faserpreform umfasst Verstärkungsfasern. Gemäß einer ersten Variante sind die Verstärkungsfasern jeweils mit mindestens einer Beschichtung beschichtet. Gemäß einer zweiten Variante sind die Verstärkungsfasern in Bündeln angeordnet, wobei diese Bündel jeweils mit mindestens einer Beschichtung beschichtet sind. Gemäß einer dritten Variante sind die Verstärkungsfasern jeweils mit mindestens einer Beschichtung beschichtet und sind die Verstärkungsfasern in Bündeln angeordnet, wobei diese Bündel jeweils mit mindestens einer Beschichtung beschichtet sind. Die mindestens eine Beschichtung der Verstärkungsfasern kann dabei aus dem gleichen Material bzw. den gleichen Materialien bestehen wie die mindestens eine Beschichtung der (Verstärkungsfaser-)Bündel. Alternativ kann die mindestens eine Beschichtung der Verstärkungsfasern nicht oder nur teilweise aus dem gleichen Material bzw. den gleichen Materialien bestehen wie die mindestens eine Beschichtung der (Verstärkungsfaser-)Bündel.

In Schritt b) werden konvexe Partikel in die Faserpreform eingebracht. Die konvexen Partikel enthalten mindestens ein Material, welches identisch ist

- mit einem Material der Verstärkungsfasern, und/oder

- mit einem Material der mindestens einen Beschichtung der Verstärkungsfasern, und/oder

- mit einem Material der mindestens einen Beschichtung der (Verstärkungsfaser-)Bündel.

Vorzugsweise bestehen die konvexen Partikel aus mindestens einem Material, welches identisch ist

- mit einem Material der Verstärkungsfasern, und/oder

- mit einem Material der mindestens einen Beschichtung der Verstärkungsfasern, und/oder

- mit einem Material der mindestens einen Beschichtung der (Verstärkungsfaser-)Bündel.

Ganz besonders bevorzugt bestehen die konvexen Partikel aus mindestens einem Material, welches identisch ist mit dem Material der Verstärkungsfasern und/oder mit dem Material der mindestens einen Beschichtung der Verstärkungsfasern und/oder mit dem Material der mindestens einen Beschichtung der Bündel.

In Schritt c) wird die Faserpreform mit einer Schmelze, z.B. einer anorganischen Schmelze, infiltriert. Diese Infiltration kann nach Schritt b) erfolgen, während Schritt b) erfolgen, oder sowohl während Schritt b) als auch nach Schritt b) erfolgen. Hierbei ist es auch möglich, dass die konvexen Partikel zusammen mit der Schmelze in die Faserpreform eingebracht werden, beispielsweise indem die Faserpreform mit einer Schmelze infiltriert wird, die die konvexen Partikel enthält.

Kern der Erfindung ist die Stabilisierung der Fasern und/oder der Faserbeschichtungen und/oder Faserbündelbeschichtungen durch konvexe Partikel, die zusätzlich in die (zu infiltrierenden) Preformen eingebracht werden. Die Partikel haben einen Krümmungsradius der kleiner als der Krümmungsradius der (Verstärkungs-)Faser ist. Der Krümmungsradius R wird aus den beiden Hauptkrümmungsradien $R_1$ und $R_2$ wie üblich nach der folgenden Gleichung (1) berechnet:

$$K = 1/R = 1/R_1 + 1/R_2 \qquad (1)$$

K ist die Oberflächenkrümmung. Bei der Faser und der Faserbeschichtung sowie bei der Faserbündelbeschichtung ist der Krümmungsradius parallel zur Längsachse unendlich und der Krümmungsradius senkrecht dazu entspricht dem halben Faserdurchmesser. Die Partikel müssen nun einen kleineren Krümmungsradius besitzen. Zum Beispiel muss bei equiaxialen konvexen Partikeln der Partikeldurchmesser kleiner sein als der doppelte Faserdurchmesser. Unter einer konvex gekrümmten Oberfläche steigt das chemische Potential $\mu$ der atomaren Spezies gemäß der folgenden Gleichung (2) um den Betrag:

$$\Delta\mu = \gamma_{sl} \cdot K \cdot \Omega \qquad\qquad (2)$$

Hierbei ist $\gamma_{sl}$ die Grenzflächenspannung zwischen dem festen Partikel bzw. der Faseraußenfläche und der Schmelze; $\Omega$ ist das Atomvolumen. Stehen zwei Oberflächen mit unterschiedlicher Krümmung mit der Schmelze in Kontakt, so findet ein Materialfluss von der Oberfläche mit größerer Krümmung, also dem größeren chemischen Potential, zu der Oberfläche mit kleiner Krümmung und entsprechend kleinerem chemischen Potential statt.

Auf diese Weise geben die konvexen Partikel ihr Material (über die Schmelze) an die Fasern und/oder Faserbeschichtungen und/oder Faserbündelbeschichtungen ab. Dies führt letztlich zu einer Verstärkung bzw. Stabilisierung der Fasern und/oder Faserbeschichtungen und/oder Faserbündelbeschichtungen. Dadurch, dass der Krümmungsradius der konvexen Partikel kleiner ist als der Krümmungsradius der Verstärkungsfasern, wird somit erreicht, dass der Materialfluss in die richtige Richtung abläuft, d.h. die konvexen Partikel ihr Material abgeben und die Fasern bzw. Faserbeschichtungen bzw. Faserbündelbeschichtungen das Material aufnehmen und folglich stabilisiert werden.

Hierbei ist auch entscheidend, dass die konvexen Partikel mindestens ein Material enthalten oder aus diesem bestehen, welches identisch ist mit einem Material der Verstärkungsfasern und/oder mit einem Material der mindestens einen Beschichtung der Verstärkungsfasern und/oder mit einem Material der mindestens einen Beschichtung der Bündel. Denn nur auf diese Weise kann ein entsprechender Materialfluss zustande kommen, der zu einer Stabilisierung der Fasern und/oder Faserbeschichtungen und/oder Faserbündelbeschichtungen führt.

Besteht die Schutzbeschichtung der Faser beispielsweise aus Siliciumcarbid, so müssen auch die konvexen Partikel Siliciumcarbid enthalten oder daraus bestehen. Die Differenz im chemischen Potential sorgt bei hinreichend kleinen Partikeln dafür, dass diese Siliciumcarbid an die Faserschutzbeschichtung abgeben und dadurch die Schutzbeschichtung gegenüber dem Angriff der Silicium-Schmelze stabilisieren.

Auch für die Gleitschicht gilt ein ähnlicher Zusammenhang. Allerdings muss bei der Berechnung des chemischen Potentials die Grenzflächenenergie zur äußeren Schutzschicht (also z.B. zu Siliciumcarbid) in Gleichung (2) eingesetzt werden. Wenn die Gleitschicht beispielsweise aus Bornitrid besteht, müssen Bornitrid-Partikel oder Bornitrid enthaltende Partikel mit entsprechend kleinem Krümmungsradius verwendet werden. Der Unterschied im chemischen Potential sorgt dann dafür, dass ein Diffusionsfluss von den Bornitrid-Partikeln bzw. Bornitrid enthaltenden Partikeln zu der Gleitschicht stattfindet und die Gleitschicht stabilisiert wird.

Aus Gleichung (2) wird ersichtlich, weshalb die übliche Sättigung der Schmelze mit den in der Faser bzw. der Faserbeschichtung vorhandenen Spezies weitgehend unwirksam ist. Die Sättigungskonzentration der Schmelze ist erreicht, wenn diese im Gleichgewicht mit einer ebenen Oberfläche aus dem zu lösenden Material steht. Da jedoch die Faser eine konvexe Krümmung aufweist, ist die Aktivität der entsprechenden Spezies an der Faseroberfläche höher als in der Schmelze und die Schmelze kann zusätzliches Material aus der Faser lösen. Dies führt zur Zerstörung der Beschichtung bzw. zur Schädigung der Fasern. Eine Übersättigung der Schmelze ist nicht zielführend, weil dies zu Ausscheidungen der entsprechenden Komponenten führen würde.

Durch das Einbringen konvexer Partikel in die Faserpreform, die mindestens ein Material enthalten oder aus diesem bestehen, welches identisch ist mit einem Material der Verstärkungsfasern und/oder mit einem Material der mindestens einen Beschichtung der Verstärkungsfasern und/oder mit einem Material der mindestens einen Beschichtung der Bündel, und deren Krümmungsradius kleiner ist als der Krümmungsradius der Verstärkungsfasern, kann somit eine Stabilisierung der Verstärkungsfasern, Verstärkungsfaserbeschichtungen und/oder Verstärkungsfaserbündelbeschichtungen erreicht werden. Mit der vorliegenden Erfindung ist es somit möglich, Verstärkungsfasern, wie z.B. keramische Fasern, umfassende Faserpreformen mit Schmelzen zu infiltrieren, ohne dass die Fasern beschädigt werden, obwohl die Fasern nur mit dünnen Beschichtungen geschützt sind. Die Fasern bleiben auf diese Weise nach der Beschichtung textil verarbeitbar. Dies ist vorteilhaft, da so z.B. industrielle Prepreg-Verfahren oder moderne 3D-Webverfahren genutzt werden können. Letztere ermöglichen eine lastgerechte und damit besonders effiziente Anordnung der Fasern.

Auch beim Hochtemperatureinsatz des faserverstärkten Verbundwerkstoffs ist die Stabilisierung mit dem beschriebenen Mechanismus wirksam. In diesem Fall erfolgt der Diffusionsfluss nicht durch die Schmelze sondern durch die aus der Schmelze erstarrte Festphase. In Gleichung (2) ist deshalb die Grenzflächenenergie zwischen den Partikeln und dieser Festphase einzusetzen. Die beschriebenen Phänomene bleiben aber dieselben. Aufgrund dessen wird die Langzeitbeständigkeit entsprechend stabilisierter faserverstärkter Verbundwerkstoffe verbessert.

Bei dem erfindungsgemäßen Verfahren zur Herstellung eines faserverstärkten Verbundwerkstoffs kann es sich beispielsweise um ein Verfahren zur Herstellung eines keramischen Faserverbundwerkstoffs (CMC), eines Glas-Matrix-Verbundwerkstoffs (GMC) oder eines Metall-Matrix-Verbundwerkstoffs (MMC) handeln.

Eine bevorzugte Variante des erfindungsgemäßen Verfahrens zeichnet sich dadurch aus, dass der Krümmungsradius der konvexen Partikel kleiner ist als der doppelte Durchmesser der Verstärkungsfasern ohne Beschichtung oder der Verstärkungsfasern mit der mindestens einen Beschichtung.

Eine weitere bevorzugte Variante des erfindungsgemäßen Verfahrens ist dadurch gekennzeichnet, dass die Verstärkungsfasern ein Material enthalten oder aus diesem bestehen, welches ausgewählt ist aus der Gruppe bestehend aus Kohlenstoff, Siliciumcarbid, Oxidkeramiken und Mischungen hiervon.

Weiterhin ist es bevorzugt, dass die mindestens eine Beschichtung der Verstärkungsfasern und/oder die mindestens eine Beschichtung der Bündel

- mindestens eine Schutzbeschichtung umfasst, welche vorzugsweise ein Material enthält oder aus diesem besteht, welches ausgewählt ist aus der Gruppe bestehend aus Kohlenstoff, Siliciumcarbid, Siliciumnitrid, Oxidkeramiken und Mischungen hiervon, und/oder

- mindestens eine Gleitschicht umfasst, welche vorzugsweise ein Material enthält oder aus diesem besteht, welches ausgewählt ist aus der Gruppe bestehend aus Bornitrid, pyrolytisch abgeschiedenem Kohlenstoff, Schichtsilicaten, Hexaluminaten, Schichtperowskiten und Mischungen hiervon.

Gemäß einer weiteren bevorzugten Variante des erfindungsgemäßen Verfahrens werden zusätzlich weitere Partikel, vorzugsweise Carbon-Partikel, in die Faserpreform eingebracht, die kein Material enthalten, das mit einem Material der Verstärkungsfasern und/oder mit einem Material der mindestens einen Beschichtung der Fasern und/oder mit einem Material der mindestens einen Beschichtung der Bündel identisch ist. Die weiteren Partikel können konvexe Partikel und/oder nicht-konvexe Partikel umfassen. Die weiteren Partikel können andere Funktionen im faserverstärkten Verbundwerkstoff als die Stabilisierung übernehmen. Zum Beispiel können beim LSI-Prozess zusätzliche Carbon-Partikel eingesetzt werden, die mit dem Si zu SiC reagieren und die Steifigkeit der Matrix erhöhen.

Eine weitere bevorzugte Variante des erfindungsgemäßen Verfahrens zeichnet sich dadurch aus, dass die konvexen Partikel eine monomodale Partikelgrößenverteilung aufweisen.

Dadurch, dass die konvexen Partikel eine monomodale Partikelgrößenverteilung aufweisen, kann das sog. Phänomen der Ostwaldreifung verlangsamt werden, was zu einer besseren Stabilisierung der Fasern bzw. Faserbeschichtungen bzw. Faserbündelbeschichtungen führt. So besitzen die zur Stabilisierung eingesetzten Partikel in der Regel unterschiedliche Partikelgrößen und damit unterschiedliche Oberflächenkrümmungen. Dies kann dazu führen, dass größere Partikel aufgrund des kleineren chemischen Potentials - vgl. Gleichung (2) - auf Kosten kleinerer benachbarter Partikel wachsen. Dieses Phänomen wird als Ostwaldreifung bezeichnet. Sobald die größeren Partikel dann groß genug sind, können sie Material aus der Faser bzw. der Faserbeschichtung aufnehmen und so eine schädliche Wirkung ausüben. Diese Form der Ostwaldreifung wird durch den Einsatz monomodaler Partikelfraktionen verlangsamt.

Gemäß einer weiteren bevorzugten Variante des erfindungsgemäßen Verfahrens weisen die konvexen Partikel eine Partikelgröße im Bereich von 0,05 $\mu m$ bis 20 $\mu m$, bevorzugt im Bereich von 0,2 $\mu m$ bis 2 $\mu m$, auf.

Durch die Begrenzung der Partikelgröße auf maximal 20 $\mu m$, vorzugweise maximal 2 $\mu m$, wird die Verwendung sehr großer konvexer Partikel vermieden. wodurch ebenfalls das sog. Phänomen der Ostwaldreifung verlangsamt wird, was zu einer besseren Stabilisierung der Fasern bzw. Faserbeschichtungen bzw. Faserbündelbeschichtungen führt.

Zudem wird durch die Begrenzung der Partikelgröße auf mindestens 0,05 $\mu m$, vorzugweise mindestens 0,2 $\mu m$, die Verwendung sehr kleiner konvexer Partikel vermieden. Hierdurch wird eine sehr rasche Zersetzung der Partikel verlangsamt, wodurch eine eventuell damit verbundene Entziehung des Materials durch Gasfreisetzung oder Ausfällung verlangsamt wird. So können nämlich unerwünschte Wechselwirkungen zwischen Partikeln unterschiedlicher Zusammensetzung auftreten. Dies ist z.B. der Fall, wenn sich aus den Spezies neue Verbindungen mit höherer thermodynamischer Stabilität ausbilden als die Ausgangsverbindungen. Dann können die entsprechenden Spezies ausgefällt werden und der Schmelze die zur Stabilisierung der Faser und der Faserbeschichtung benötigten Komponenten entziehen. Wenn die Löslichkeit für einzelne in den Partikeln vorhandene Spezies in der Schmelze gering und diese Spezies unter den Infiltrationsbedingungen gasförmig sind, kann es auch zu unerwünschten Gasfreisetzungen kommen. Zum Beispiel zersetzt sich Bornitrid (BN) in der Si-Schmelze in Bor und Stickstoff, wobei die Stickstofflöslichkeit sehr gering ist, so dass eine zu rasche Auflösung von BN-Partikeln nachteilig sein kann und die Größe der Partikel deshalb nicht zu gering gewählt werden darf.

Eine weitere bevorzugte Variante des erfindungsgemäßen Verfahrens ist dadurch gekennzeichnet, dass die konvexen Partikel zumindest teilweise durch Tränken der Verstärkungsfasern mit mindestens einem die konvexen Partikel enthaltenden Schlicker in die Faserpreform eingebracht werden, wobei das Tränken der Verstärkungsfasern mit dem mindestens einem Schlicker vorzugsweise vor, während und/oder nach einer textilen Verarbeitung der Faserpreform erfolgt.

Durch ein solches Einbringen der konvexen Partikel kann erreicht werden, dass sich die konvexen Partikel in der Nähe der Faseroberflächen befinden, wodurch die Stabilisierung erleichtert wird. Zudem können auf diese Weise Konzentrationsgradienten und Agglomerate der Partikel vermieden werden.

Weiterhin ist es bevorzugt, dass der mindestens eine Schlicker mindestens einen Hilfsstoff ausgewählt aus der Gruppe bestehend aus Dispergatoren, Rheologiemodifizierer und Mischungen hiervon enthält.

Durch zusätzliche Dispergatoren im Schlicker können Agglomerate verhinder werden. Durch Rheologimodifizierer im Schlicker kann die Rheologie des Schlickers so auf den Imprägnierungsprozess bzw. das Tränken mit dem Schlicker abgestimmt werden, dass der Schlicker auch weniger gut zugängliche Faseroberflächen erreicht und nach der Imprägnierung in der Preform verbleibt. Im Vergleich zur Schlickerimprägnierung ist eine Dotierung der Schmelze mit den Stabilisierungspartikeln weniger vorteilhaft, aber grundsätzlich auch möglich. Nachteilig wirkt sich in diesem Fall aus, dass auf dem Weg der Schmelze in die Preform bereits Entmischungen auftreten können.

Eine weitere bevorzugte Variante des erfindungsgemäßen Verfahrens ist dadurch gekennzeichnet, dass die Schmelze eine anorganische Schmelze ist, wobei die Schmelze vorzugsweise

- eine Silicium-Schmelze oder eine Schmelze einer Silicium-Legierung ist, oder

- eine Glasschmelze ist, die vorzugsweise bei Temperaturen oberhalb der Glasübergangstemperatur $T_g$ eine kristalline Phase ausbildet, oder

- eine Schmelze aus einem Oxid oder einer Mischung verschiedener Oxide, z.B. mit einem (geeigneten) Eutektikum, ist, oder

- eine Metallschmelze ist.

Durch Verwendung einer Schmelze aus einem Oxid oder einer Mischung verschiedener Oxide, z.B. mit einem (geeigneten) Eutektikum, kann die Oxidationsstabilität des faserverstärkten Verbundwerkstoffs verbessert werden.

In einer weiteren bevorzugten Variante des erfindungsgemäßen Verfahrens wird die Faserpreform vor Schritt c) einem Pyrolyse-Prozess unterzogen. Dieser Pyrolyse-Prozess erfolgt vorzugsweise nach Schritt b).

Ganz besonders bevorzugt werden die Fasern bzw. Faserbündel zunächst in einem Schlicker getränkt, der die konvexen Partikel enthält, wodurch die konvexen Partikel in die Faserpreform eingebracht werden. Danach werden die beschlickerten Fasern bzw. Faserbündel pyrolysiert und anschließend einzeln mit Schmelze infiltriert.

Weiterhin ist bevorzugt, dass die Schmelze die konvexen Partikel enthält und somit die konvexen Partikel zumindest teilweise durch das Infiltrieren der Faserpreform mit der Schmelze in die Faserpreform eingebracht werden. Auf diese Weise wird ein einfacheres und kostengünstigeres Verfahren erhalten, da auf zusätzliche Maßnahmen und Materialien zum Einbringen der Partikel, z.B. Verwendung eines zusätzlichen Schlickers, verzichtet werden kann.

Vorzugsweise enthält die Schmelze mindestens einen Zusatzstoff ausgewählt aus der Gruppe bestehend aus Legierungsbildnern, Carbidbildnern, Silicidbildnern, Stoffen zur Vermeidung von epitaktischem Wachstum und Mischungen hiervon. Besonders bevorzugt ist der Zusatzstoff ausgewählt aus der Gruppe bestehend aus Bor, Chrom, Molybdän, Wolfram, Vanadium, Titan, Niob und Mischungen hiervon. Diese gehören zur Gruppe, die in der Schmelzphase mit Kohlenstoff Carbide bilden können (Carbidbildner) oder mit Silicium Silicide bilden können (Silicidbildner). Durch Legierungsbildung mittels Legierungsbildner können die Schmelzpunkte der Metalle herabgesetzt werden.

Der Mechanismus nach Gleichung (1) ist dann besonders wirksam, wenn kein übermäßiges Kornwachstum einzelner zur Stabilisierung zugesetzter Partikel einsetzt. Ein solches übermäßiges Kornwachstum wird durch sehr niedrige Grenzflächenenergien von bestimmten Kristallebenen verursacht und ist an der Ausbildung facettierter Kristallite erkennbar. Solche Kristallite wachsen durch epitaktische Anlagerung weiterer Moleküle, auch wenn der Kristallitdurchmesser klein im Vergleich zum Faserdurchmesser ist. Beispielsweise ist für $\alpha$-SiC-Kristallite bekannt, dass bei diesen in Si-Schmelzen eine epitaktische Randschicht aus $\beta$-SiC aufwächst. Dieses epitaktische Wachstum kann durch geeignete Zusätze in der Schmelze oder durch den Einsatz anderer Phasen bei den Primärpartikeln vermieden werden, z.B. $\beta$-SiC statt $\alpha$-SiC-Partikel. Der stoffliche Nachweis der unterschiedlichen SiC-Phasen im Verbundwerkstoff kann mittels Röntgendiffraktometrie (XRD) erfolgen.

Auch wenn bisher in erster Linie Silicium zur Schmelzinfiltration von CMC eingesetzt wird, ist das beschriebene Stabilisierungsverfahren auch auf andere Schmelzen und Fasern übertragbar. Insbesondere können auch oxidkeramische Fasern mit oxidkeramischen Partikeln und Schmelzen aus Gläsern bzw. kristallisierenden Gläsern stabilisiert werden. Eine weitere Einsatzmöglichkeit besteht bei Metallen, die mit keramischen Fasern verstärkt werden - sogenannte MMC. Auch hier können Fasern und Beschichtungen durch entsprechende artgleiche keramische Partikel geschützt werden.

Beispielsweise kann es sich bei den mit dem erfindungsgemäßen Verfahren hergestellten faserverstärkten Verbundwerkstoffen um keramische Faserverbundwerkstoffe (CMC), Glas-Matrix-Verbundwerkstoffe (GMC) oder Metall-Matrix-Verbundwerkstoffe (MMC) handeln.

Eine weitere bevorzugte Variante des erfindungsgemäßen Verfahrens zeichnet sich dadurch aus, dass nach dem Infiltrieren der Faserpreform mit der Schmelze die Stabilisierung der Fasern, Faserbeschichtungen und/oder Faserbündelbeschichtungen am hergestellten faserverstärkten Verbundwerkstoff untersucht wird, wobei hierbei vorzugsweise

- mindestens eine Gefügeanalyse des hergestellten faserverstärkten Verbundwerkstoffes, und/oder

- mindestens eine Untersuchung der Brucheigenschaften des hergestellten faserverstärkten Verbundwerkstoffes, und/oder

- mindestens eine Untersuchung des "Pull-out" der Verstärkungsfasern durchgeführt wird.

Auf diese Weise ist eine effektive Erfolgskontrolle der Stabilisierung der Fasern bzw. Faserbeschichtungen bzw. Faserbündelbeschichtungen möglich. Hierzu können beispielsweise Versuche an Minikompositen aus einzelnen Faserbündeln durchgeführt werden. Die Faserbündel werden hierzu beschlickert und anschließend einzeln mit Schmelze infiltriert. Durch Querschliffe an den Minikompositen und anschließende Gefügeanalyse sowie durch Bruchversuche und Nachweis des Faser-"Pullouts" an den Bruchflächen kann die Wirksamkeit der Stabilisierung nachgewiesen werden.
Die vorliegende Erfindung betrifft auch einen faserverstärkten Verbundwerkstoff, welcher eine Matrix und Verstärkungsfasern umfasst, wobei die Verstärkungsfasern jeweils mit mindestens einer Beschichtung beschichtet sind und/oder die Verstärkungsfasern in Bündeln angeordnet sind, welche jeweils mit mindestens einer Beschichtung beschichtet sind, wobei der faserverstärkte Verbundwerkstoff konvexe Partikel enthält, die mindestens ein Material enthalten oder aus diesem bestehen, welches identisch ist mit einem Material der Verstärkungsfasern und/oder mit einem Material der mindestens einen Beschichtung der Verstärkungsfasern und/oder mit einem Material der mindestens einen Beschichtung der Bündel, und wobei der Krümmungsradius der konvexen Partikel kleiner ist als der Krümmungsradius der Verstärkungsfasern.
Eine bevorzugte Ausführungsform des faserverstärkten Verbundwerkstoffs ist dadurch gekennzeichnet, dass die Matrix eine Keramik-Matrix, eine Glas-Matrix oder eine Metall-Matrix ist. Bei dem erfindungsgemäßen faserverstärkten Verbundwerkstoff kann es somit vorzugsweise um einen keramischen Faserverbundwerkstoff (CMC), einen Glas-Matrix-Verbundwerkstoff (GMC) oder einen Metall-Matrix-Verbundwerkstoff (MMC) handeln.
Vorzugsweise ist der faserverstärkte Verbundwerkstoff gemäß dem erfindungsgemäßen Verfahren herstellbar oder hergestellt.
Aufgrund der Stabilisierung mit den speziellen konvexen Partikeln weist der erfindungsgemäße Verbundwerkstoff eine hohe Langzeitstabilität auf. Wie schon für das erfindungsgemäße Verfahren beschrieben, ist auch beim Hochtemperatureinsatz des hergestellten faserverstärkten Verbundwerkstoffs die Stabilisierung mit dem zuvor beschriebenen Mechanismus wirksam. In diesem Fall erfolgt der Diffusionsfluss nicht durch die Schmelze sondern durch die aus der Schmelze erstarrte Festphase. In Gleichung (2) ist deshalb die Grenzflächenenergie zwischen den Partikeln und dieser Festphase einzusetzen. Die beschriebenen Phänomene bleiben aber dieselben. Aufgrund dessen wird die Langzeitbeständigkeit entsprechend stabilisierter faserverstärkter Verbundwerkstoffe verbessert.
Die vorliegende Erfindung betrifft auch die Verwendung eines erfindungsgemäßen faserverstärkten Verbundwerkstoffs als Hochtemperaturbauteil für Gasturbinen, für Ofenanlagen, in der Hochtemperaturanlagentechnik, für Müllverbrennungsanlagen, in der Kraftwerks- und Kernfusionstechnik, als Motorenbauteile, z.B. als Motorenlager, für Solarreceiver, und/oder in der Luft- und Raumfahrttechnik, z.B. in der Satellitentechnik.
Die vorliegende Erfindung betrifft insbesondere die folgenden Aspekte:

**Aspekt 1:** Verfahren zur Herstellung faserverstärkter Verbundwerkstoffe mit stabilisierten Fasern, Faserbeschichtungen und/oder Faserbündelbeschichtungen, bei welchem

a) eine Faserpreform bereitgestellt wird, die Verstärkungsfasern umfasst, wobei die Verstärkungsfasern jeweils mit mindestens einer Beschichtung beschichtet sind und/oder die Verstärkungsfasern in Bündeln angeordnet sind, welche jeweils mit mindestens einer Beschichtung beschichtet sind,

b) konvexe Partikel in die Faserpreform eingebracht werden, die mindestens ein Material enthalten oder aus diesem bestehen, welches identisch ist mit einem Material der Verstärkungsfasern und/oder mit einem Material der mindestens einen Beschichtung der Verstärkungsfasern und/oder mit einem Material der mindestens einen Beschichtung der Bündel, und

c) die Faserpreform mit einer Schmelze infiltriert wird,

wobei Schritt c) während Schritt b) und/oder nach Schritt b) erfolgt, und wobei der Krümmungsradius der konvexen Partikel kleiner ist als der Krümmungsradius der Verstärkungsfasern.

**Aspekt 2:** Verfahren gemäß dem vorhergehenden Aspekt, dadurch gekennzeichnet, dass der Krümmungsradius der konvexen Partikel kleiner ist als der doppelte Durchmesser der Verstärkungsfasern ohne Beschichtung oder der Verstärkungsfasern mit der mindestens einen Beschichtung.

**Aspekt 3:** Verfahren gemäß einem der vorhergehenden Aspekte, dadurch gekennzeichnet, dass die Verstärkungsfasern ein Material enthalten oder aus diesem bestehen, welches ausgewählt ist aus der Gruppe bestehend aus Kohlenstoff, Siliciumcarbid, Oxidkeramiken und Mischungen hiervon.

**Aspekt 4:** Verfahren gemäß einem der vorhergehenden Aspekte, dadurch gekennzeichnet, dass die mindestens eine Beschichtung der Verstärkungsfasern und/oder die mindestens eine Beschichtung der Bündel

- mindestens eine Schutzbeschichtung umfasst, welche vorzugsweise ein Material enthält oder aus diesem besteht, welches ausgewählt ist aus der Gruppe bestehend aus Kohlenstoff, Siliciumcarbid, Siliciumnitrid, Oxidkeramiken und Mischungen hiervon, und/oder

- mindestens eine Gleitschicht umfasst, welche vorzugsweise ein Material enthält oder aus diesem besteht, welches ausgewählt ist aus der Gruppe bestehend aus Bornitrid, pyrolytisch abgeschiedenem Kohlenstoff, Schichtsilicaten, Hexaluminaten, Schichtperowskiten und Mischungen hiervon.

**Aspekt 5:** Verfahren gemäß einem der vorhergehenden Aspekte, dadurch gekennzeichnet, dass zusätzlich weitere Partikel, vorzugsweise Carbon-Partikel, in die Faserpreform eingebracht werden, die kein Material enthalten, das mit einem Material der Verstärkungsfasern und/oder mit einem Material der mindestens einen Beschichtung der Fasern und/oder mit einem Material der mindestens einen Beschichtung der Bündel identisch ist.

**Aspekt 6:** Verfahren gemäß einem der vorhergehenden Aspekte, dadurch gekennzeichnet, dass die konvexen Partikel eine monomodale Partikelgrößenverteilung aufweisen.

**Aspekt 7:** Verfahren gemäß einem der vorhergehenden Aspekte, dadurch gekennzeichnet, dass die konvexen Partikel eine Partikelgröße im Bereich von 0,05 $\mu$m bis 20 $\mu$m, bevorzugt im Bereich von 0,2 $\mu$m bis 2 $\mu$m, aufweisen.

**Aspekt 8:** Verfahren gemäß einem der vorhergehenden Aspekte, dadurch gekennzeichnet, dass die konvexen Partikel zumindest teilweise durch Tränken der Verstärkungsfasern mit mindestens einem die konvexen Partikel enthaltenden Schlicker in die Faserpreform eingebracht werden, wobei das Tränken der Verstärkungsfasern mit dem mindestens einem Schlicker vorzugsweise vor, während und/oder nach einer textilen Verarbeitung der Faserpreform erfolgt.

**Aspekt 9:** Verfahren gemäß Aspekt 8, dadurch gekennzeichnet, dass der mindestens eine Schlicker mindestens einen Hilfsstoff ausgewählt aus der Gruppe bestehend aus Dispergatoren, Rheologiemodifizierer und Mischungen hiervon enthält.

**Aspekt 10:** Verfahren gemäß einem der vorhergehenden Aspekte, dadurch gekennzeichnet, dass die Schmelze eine anorganische Schmelze ist, wobei die Schmelze vorzugsweise

- eine Silicium-Schmelze oder eine Schmelze einer Silicium-Legierung ist, oder

- eine Glasschmelze ist, die vorzugsweise bei Temperaturen oberhalb der Glasübergangstemperatur $T_g$ eine kristalline Phase ausbildet, oder

- eine Metallschmelze ist.

**Aspekt 11:** Verfahren gemäß einem der vorhergehenden Aspekte, dadurch gekennzeichnet, dass die Schmelze die konvexen Partikel enthält und somit die konvexen Partikel zumindest teilweise durch das Infiltrieren der Faserpreform mit der Schmelze in die Faserpreform eingebracht werden.

**Aspekt 12:** Verfahren gemäß einem der vorhergehenden Aspekte, dadurch gekennzeichnet, dass die Schmelze mindestens einen Zusatzstoff ausgewählt aus der Gruppe bestehend aus Legierungsbildnern, Carbidbildnern, Silicidbildnern, Stoffen zur Vermeidung von epitaktischem Wachstum und Mischungen hiervon enthält.

**Aspekt 13:** Verfahren gemäß einem der vorhergehenden Aspekte dadurch gekennzeichnet, dass nach dem Infiltrieren der Faserpreform mit der Schmelze die Stabilisierung der Fasern, Faserbeschichtungen und/oder Faserbündelbeschichtungen am hergestellten faserverstärkten Verbundwerkstoff untersucht wird, wobei hierbei vorzugsweise

- mindestens eine Gefügeanalyse des hergestellten faserverstärkten Verbundwerkstoffes, und/oder

- mindestens eine Untersuchung der Brucheigenschaften des hergestellten faserverstärkten Verbundwerkstoffes, und/oder

- mindestens eine Untersuchung des "Pull-out" der Verstärkungsfasern

durchgeführt wird.

**Aspekt 14:** Faserverstärkter Verbundwerkstoff, welcher eine Matrix und Verstärkungsfasern umfasst,
wobei die Verstärkungsfasern jeweils mit mindestens einer Beschichtung beschichtet sind und/oder die Verstärkungsfasern in Bündeln angeordnet sind, welche jeweils mit mindestens einer Beschichtung beschichtet sind,
wobei der faserverstärkte Verbundwerkstoff konvexe Partikel enthält, die mindestens ein Material enthalten oder aus diesem bestehen, welches identisch ist mit einem Material der Verstärkungsfasern und/oder mit einem Material der mindestens einen Beschichtung der Verstärkungsfasern und/oder mit einem Material der mindestens einen Beschichtung der Bündel, und
wobei der Krümmungsradius der konvexen Partikel kleiner ist als der Krümmungsradius der Verstärkungsfasern.

**Aspekt 15:** Faserverstärkter Verbundwerkstoff gemäß Aspekt 14, dadurch gekennzeichnet, dass die Matrix eine Keramik-Matrix, eine Glas-Matrix oder eine Metall-Matrix ist.

**Aspekt 16:** Faserverstärkter Verbundwerkstoff gemäß einem der Aspekte 14 oder 15, dadurch gekennzeichnet, dass der faserverstärkte Verbundwerkstoff nach einem Verfahren gemäß einem Aspekte 1 bis 13 herstellbar oder hergestellt ist.

**Aspekt 17:** Verwendung eines faserverstärkten Verbundwerkstoffs nach einem der Aspekte 14 bis 16 als Hochtemperaturbauteil für Gasturbinen, für Ofenanlagen, in der Hochtemperaturanlagentechnik, für Müllverbrennungsanlagen, in der Kraftwerks- und Kernfusionstechnik, als Motorenbauteile, z.B. als Motorenlager, für Solarreceiver, und/oder in der Luft- und Raumfahrttechnik, z.B. in der Satellitentechnik.

Die vorliegende Erfindung wird anhand der nachfolgenden Figuren und des nachfolgenden Beispiels näher erläutert, ohne die Erfindung auf die speziell dargestellten Parameter zu beschränken.

**Ausführungsbeispiel**

Zunächst wird eine Faserpreform bereitgestellt, die Verstärkungsfasern umfasst, welche aus Siliciumcarbid bestehen. Die Verstärkungsfasern sind in Bündeln angeordnet, welche jeweils mit mindestens einer Beschichtung (z.B. einer Siliciumcarbid-Beschichtung) beschichtet sind. Danach werden die Verstärkungsfasern bzw. die Verstärkungsfaserbündel mit einem Schlicker getränkt, der konvexe Siliciumcarbid-Partikel enthält. Auf diese Weise werden die konvexen Siliciumcarbid-Partikel in die Faserpreform eingebracht. Danach werden Verstärkungsfaserbündel einem Pyrolyse-Prozess unterzogen. Im Anschluss wird die Faserpreform mit einer Silicium-Schmelze gemäß dem LSI-Verfahren infiltriert (Silizierung). Es wird schließlich ein faserverstärkter Verbundwerkstoff erhalten, dessen Fasern und Faserbeschichtungen durch den Einsatz der konvexen Partikel in der Matrix erhalten bleiben.

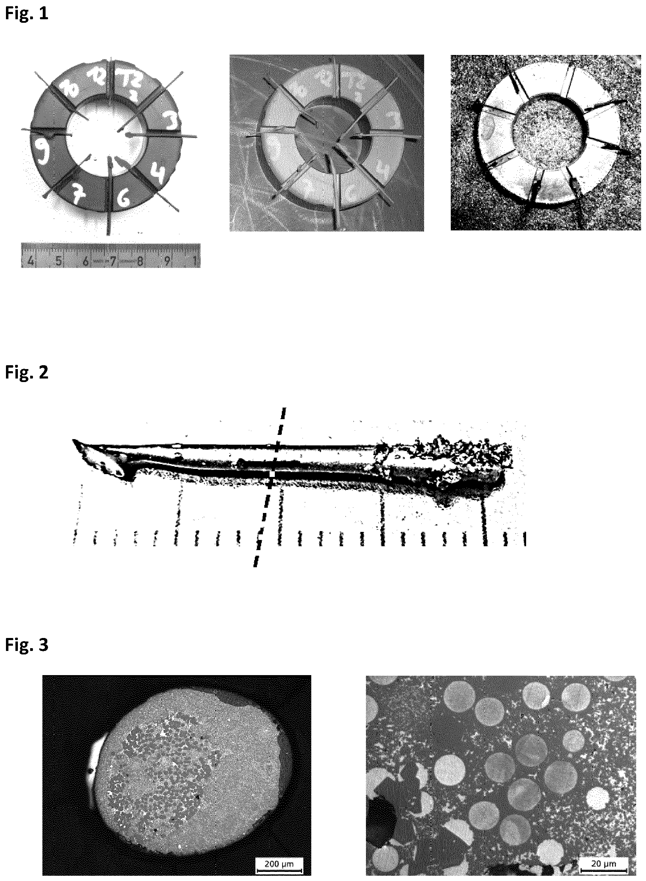

In den drei Abbildungen der Figur 1 ist der Versuchsaufbau zur Herstellung der Minikomposites dargestellt.

Figur 1 links zeigt den Ausgangszustand des Hochtemperaturaufbaus nach der Präparation bei Raumtemperatur. In einem mit 8 Nuten versehenen monolithischen gesinterten SSiC-Ring als Tragstruktur sind 8 mit Schlicker imprägnierte und anschließend durch Trocknung stabilisierte SiC-Faserrovingabschnitte symmetrisch positioniert, so dass diese sich gegenseitig nicht berühren können.

Figur 1 mitte zeigt den Versuchsaufbau bei Raumtemperatur nach der Pyrolyse bei 990 mbar unter Argon bei 1600 °C.

Figur 1 rechts zeigt den Endzustand der 8 Rovings nach der Silizierung mit schräg zur Tragstruktur positionierten Einzelrovings. Das Siliciumangebot erfolgte hier über Siliciumpartikel mit einer Korngröße < 2 mm auf einer Pufferplatte aus rekristallisiertem SiC, die außerhalb des Rings positioniert sind und in direktem stofflichen Kontakt zu den pyrolysierten Einzelrovings stehen. Es ist jedoch auch möglich über am Boden in SSiC hartbearbeitete Langlochreservoire jedes Filament für sich mit einer definierten Menge an Silicium von 0,1 g zu versorgen.

In Figur 2 ist ein entsprechend hergestellter Faserverbundwerkstoff mit ca. 20 mm Länge nach Infiltration mit einer Siliciumschmelze dargestellt. Der infiltrierte Faserstrang enthält rechterhand noch Reste von erstarrter Siliciumschmelze an der Faseroberfläche. Dieses, nicht durch das Faserbündel aufgenommene und somit überschüssige, Silicium ist als dunkle, perlartige Abscheidung auf der glatten Faseroberfläche sichtbar.

An den einzelnen Querschliffen der Minikomposite kann eine mikroskopische Gefügeanalyse durchgeführt werden.

Eine entsprechende mikroskopische Aufnahme eines mit Siliciumschmelze vollständig infiltrierten Faserbündelquerschnitts mit 500 Filamenten aus Figur 2 (gestrichelte Linie) ist in Figur 3 links dargestellt. Das Gefüge in Figur 3 rechts zeigt vollständig erhaltene Faserquerschnitte, die in einer partikelhaltigen Matrix aus SiC-Partikeln und erstarrter Siliciumschmelze eingebettet sind. Anhand der Querschnitte der Einzelfilamente lässt sich deren Umsetzungsgrad ermitteln. Dunkle Querschnitte weisen auf einen vollständigen Erhalt der SiC-Fasern hin. Hell erscheinende Filamentquerschnitte weisen auf eine stoffliche Umsetzung der ursprünglichen Fasern oder einen Ersatz durch Silicium hin. Daneben gibt es Querschnitte mit einem hell-dunkel Kontrast, die auf eine teilweise Umsetzung der Fasern hindeuten. Durch statistische Auswertung einer repräsentativen Filamentanzahl (z.B. etwa 50 Filamente) bei Betrachtung einer festgelegten Querschnittsfläche von etwa 0,04 mm$^2$ (0,236 mm x 0,171 mm) kann auf die Wirksamkeit der Faserbeschichtung bzw. Matrixdotierung geschlossen werden.

## Patentansprüche

1. Verfahren zur Herstellung faserverstärkter Verbundwerkstoffe mit stabilisierten Fasern, Faserbeschichtungen und/oder Faserbündelbeschichtungen, bei welchem

   a) eine Faserpreform bereitgestellt wird, die Verstärkungsfasern umfasst, wobei die Verstärkungsfasern jeweils mit mindestens einer Beschichtung beschichtet sind und/oder die Verstärkungsfasern in Bündeln angeordnet sind, welche jeweils mit mindestens einer Beschichtung beschichtet sind,
   b) konvexe Partikel in die Faserpreform eingebracht werden, die mindestens ein Material enthalten oder aus diesem bestehen, welches identisch ist mit einem Material der Verstärkungsfasern und/oder mit einem Material der mindestens einen Beschichtung der Verstärkungsfasern und/oder mit einem Material der mindestens einen Beschichtung der Bündel, und
   c) die Faserpreform mit einer Schmelze infiltriert wird,

   wobei Schritt c) während Schritt b) und/oder nach Schritt b) erfolgt, und wobei der Krümmungsradius der konvexen Partikel kleiner ist als der Krümmungsradius der Verstärkungsfasern.

2. Verfahren gemäß dem vorhergehenden Anspruch, **dadurch gekennzeichnet, dass** der Krümmungsradius der konvexen Partikel kleiner ist als der doppelte Durchmesser der Verstärkungsfasern ohne Beschichtung oder der Verstärkungsfasern mit der mindestens einen Beschichtung.

3. Verfahren gemäß einem der vorhergehenden Ansprüche, **dadurch gekennzeichnet, dass** die Verstärkungsfasern ein Material enthalten oder aus diesem bestehen, welches ausgewählt ist aus der Gruppe bestehend aus Kohlenstoff, Siliciumcarbid, Oxidkeramiken und Mischungen hiervon.

4. Verfahren gemäß einem der vorhergehenden Ansprüche, **dadurch gekennzeichnet, dass** die mindestens eine Beschichtung der Verstärkungsfasern und/oder die mindestens eine Beschichtung der Bündel

   - mindestens eine Schutzbeschichtung umfasst, welche vorzugsweise ein Material enthält oder aus diesem besteht, welches ausgewählt ist aus der Gruppe bestehend aus Kohlenstoff, Siliciumcarbid, Siliciumnitrid, Oxidkeramiken und Mischungen hiervon, und/oder
   - mindestens eine Gleitschicht umfasst, welche vorzugsweise ein Material enthält oder aus diesem besteht, welches ausgewählt ist aus der Gruppe bestehend aus Bornitrid, pyrolytisch abgeschiedenem Kohlenstoff, Schichtsilicaten, Hexaluminaten, Schichtperowskiten und Mischungen hiervon.

5. Verfahren gemäß einem der vorhergehenden Ansprüche, **dadurch gekennzeichnet, dass** zusätzlich weitere Partikel, vorzugsweise Carbon-Partikel, in die Faserpreform eingebracht werden, die kein Material enthalten, das mit einem Material der Verstärkungsfasern und/oder mit einem Material der mindestens einen Beschichtung der Fasern und/oder mit einem Material der mindestens einen Beschichtung der Bündel identisch ist.

6. Verfahren gemäß einem der vorhergehenden Ansprüche, **dadurch gekennzeichnet, dass** die konvexen Partikel

   - eine monomodale Partikelgrößenverteilung aufweisen, und/oder
   - eine Partikelgröße im Bereich von 0,05 μm bis 20 μm, bevorzugt im Bereich von 0,2 μm bis 2 μm, aufweisen.

7. Verfahren gemäß einem der vorhergehenden Ansprüche, **dadurch gekennzeichnet, dass** die konvexen Partikel zumindest teilweise durch Tränken der Verstärkungsfasern mit mindestens einem die konvexen Partikel enthaltenden Schlicker in die Faserpreform eingebracht werden, wobei vorzugsweise

   - das Tränken der Verstärkungsfasern mit dem mindestens einem Schlicker vor, während und/oder nach einer textilen Verarbeitung der Faserpreform erfolgt, und/oder
   - der mindestens eine Schlicker mindestens einen Hilfsstoff ausgewählt aus der Gruppe bestehend aus Dispergatoren, Rheologiemodifizierer und Mischungen hiervon enthält.

8. Verfahren gemäß einem der vorhergehenden Ansprüche, **dadurch gekennzeichnet, dass** die Schmelze eine anorganische Schmelze ist, wobei die Schmelze vorzugsweise

   - eine Silicium-Schmelze oder eine Schmelze einer Silicium-Legierung ist, oder
   - eine Glasschmelze ist, die vorzugsweise bei Temperaturen oberhalb der Glasübergangstemperatur $T_g$ eine kristalline Phase ausbildet, oder
   - eine Schmelze aus einem Oxid oder einer Mischung verschiedener Oxide, z.B. mit einem geeigneten Eutektikum, ist, oder
   - eine Metallschmelze ist.

9. Verfahren gemäß einem der vorhergehenden Ansprüche, **dadurch gekennzeichnet, dass** die Schmelze die konvexen Partikel enthält und somit die konvexen Partikel zumindest teilweise durch das Infiltrieren der Faserpreform mit der Schmelze in die Faserpreform eingebracht werden.

10. Verfahren gemäß einem der vorhergehenden Ansprüche, **dadurch gekennzeichnet, dass** die Schmelze mindestens einen Zusatzstoff ausgewählt aus der Gruppe bestehend aus Legierungsbildnern, Carbidbildnern, Silicidbildnern, Stoffen zur Vermeidung von epitaktischem Wachstum und Mischungen hiervon enthält.

11. Verfahren gemäß einem der vorhergehenden Ansprüche, **dadurch gekennzeichnet, dass** nach dem Infiltrieren der Faserpreform mit der Schmelze die Stabilisierung der Fasern, Faserbeschichtungen und/oder Faserbündelbeschichtungen am hergestellten faserverstärkten Verbundwerkstoff untersucht wird, wobei hierbei vorzugsweise

   - mindestens eine Gefügeanalyse des hergestellten faserverstärkten Verbundwerkstoffes, und/oder
   - mindestens eine Untersuchung der Brucheigenschaften des hergestellten faserverstärkten Verbundwerkstoffes, und/oder
   - mindestens eine Untersuchung des "Pull-out" der Verstärkungsfasern

durchgeführt wird.

12. Faserverstärkter Verbundwerkstoff, welcher eine Matrix und Verstärkungsfasern umfasst,
wobei die Verstärkungsfasern jeweils mit mindestens einer Beschichtung beschichtet sind und/oder die Verstärkungsfasern in Bündeln angeordnet sind, welche jeweils mit mindestens einer Beschichtung beschichtet sind,
wobei der faserverstärkte Verbundwerkstoff konvexe Partikel enthält, die mindestens ein Material enthalten oder aus diesem bestehen, welches identisch ist mit einem Material der Verstärkungsfasern und/oder mit einem Material der mindestens einen Beschichtung der Verstärkungsfasern und/oder mit einem Material der mindestens einen Beschichtung der Bündel, und
wobei der Krümmungsradius der konvexen Partikel kleiner ist als der Krümmungsradius der Verstärkungsfasern.

13. Faserverstärkter Verbundwerkstoff gemäß Anspruch 12, **dadurch gekennzeichnet, dass** die Matrix eine Keramik-Matrix, eine Glas-Matrix oder eine Metall-Matrix ist.

14. Faserverstärkter Verbundwerkstoff gemäß einem der Ansprüche 12 oder 13, **dadurch gekennzeichnet, dass** der faserverstärkte Verbundwerkstoff nach einem Verfahren gemäß einem Ansprüche 1 bis 11 herstellbar oder hergestellt ist.

15. Verwendung eines faserverstärkten Verbundwerkstoffs nach einem der Ansprüche 12 bis 14 als Hochtemperaturbauteil für Gasturbinen, für Ofenanlagen, in der Hochtemperaturanlagentechnik, für Müllverbrennungsanlagen, in der Kraftwerks- und Kernfusionstechnik, als Motorenbauteile, z.B. als Motorenlager, für Solarreceiver, und/oder in der Luft- und Raumfahrtechnik, z.B. in der Satellitentechnik.

**Fig. 1**

**Fig. 2**

**Fig. 3**

**Europäisches Patentamt**
**European Patent Office**
**Office européen des brevets**

# EUROPÄISCHER RECHERCHENBERICHT

**Nummer der Anmeldung**

EP 20 19 4172

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/029340 A1 (WEAVER JARED HOGG [US] ET AL) 2. Februar 2017 (2017-02-02) * Absätze [0002], [0033] - [0051]; Ansprüche 1,5,9,12,15; Abbildungen 4-7; Beispiel 1 * ----- | 1-8, 11-15 | INV. C04B35/573 C03C14/00 C04B35/628 C04B35/653 C04B35/80 C22C29/00 |
| X | DE 693 11 425 T2 (GEN ELECTRIC [US]) 22. Januar 1998 (1998-01-22) * Seite 2, Absatz 2; Beispiel 2 * ----- | 12-15 | |
| X | DE 695 24 432 T2 (TOSHIBA KAWASAKI KK [JP]) 1. August 2002 (2002-08-01) * Absätze [0002], [0112], [0113]; Abbildung 2; Beispiel 3 * ----- | 1-8, 11-15 | |
| X | US 6 024 898 A (STEIBEL JAMES D [US] ET AL) 15. Februar 2000 (2000-02-15) * Spalte 4, Zeilen 1-2; Beispiel A * * Spalte 6, Zeile 19 - Zeile 31 * ----- | 1-8, 10-14 | |
| X | DE 696 07 056 T2 (TOSHIBA KAWASAKI KK [JP]) 9. November 2000 (2000-11-09) * Absatz [0002]; Beispiel 1 * ----- | 1-8, 11-15 | **RECHERCHIERTE SACHGEBIETE (IPC)** C04B C22C C03C |
| X A | DE 697 02 677 T2 (TOSHIBA KAWASAKI KK [JP]) 29. März 2001 (2001-03-29) * Absatz [0004]; Beispiel 1 * ----- | 1-8, 10-15 9 | |

Der vorliegende Recherchenbericht wurde für alle Patentansprüche erstellt

| Recherchenort | Abschlußdatum der Recherche | Prüfer |
|---|---|---|
| Den Haag | 29. Januar 2021 | Raming, Tomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 19 4172

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-01-2021

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 2017029340 | A1 | 02-02-2017 | CA | 2936663 | A1 | 30-01-2017 |
| | | | CN | 106396713 | A | 15-02-2017 |
| | | | EP | 3124458 | A1 | 01-02-2017 |
| | | | JP | 2017031396 | A | 09-02-2017 |
| | | | US | 2017029340 | A1 | 02-02-2017 |
| DE 69311425 | T2 | 22-01-1998 | DE | 69311425 | T2 | 22-01-1998 |
| | | | EP | 0564245 | A2 | 06-10-1993 |
| | | | JP | H069279 | A | 18-01-1994 |
| | | | JP | 3343150 | B2 | 11-11-2002 |
| | | | US | 5294489 | A | 15-03-1994 |
| DE 69524432 | T2 | 01-08-2002 | DE | 69524432 | T2 | 01-08-2002 |
| | | | EP | 0781737 | A1 | 02-07-1997 |
| | | | JP | 4106086 | B2 | 25-06-2008 |
| | | | US | 6217997 | B1 | 17-04-2001 |
| | | | WO | 9608453 | A1 | 21-03-1996 |
| US 6024898 | A | 15-02-2000 | US | 6024898 | A | 15-02-2000 |
| | | | US | 6258737 | B1 | 10-07-2001 |
| DE 69607056 | T2 | 09-11-2000 | DE | 69607056 | T2 | 09-11-2000 |
| | | | EP | 0742185 | A1 | 13-11-1996 |
| | | | US | 5939216 | A | 17-08-1999 |
| DE 69702677 | T2 | 29-03-2001 | DE | 69702677 | T2 | 29-03-2001 |
| | | | EP | 0798281 | A2 | 01-10-1997 |
| | | | US | 5955391 | A | 21-09-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9721874 B
- US 20130167374 A1

- EP 3231782 A1